# EUROPÄISCHE PATENTANMELDUNG

(11) **EP 3 476 471 A1**
(43) Veröffentlichungstag der Anmeldung: **01.05.2019**
(21) Anmeldenummer: 17198318.2
(22) Anmeldetag: 25.10.2017
(51) Int. Cl.: B01J 8/06

(54) **VERFAHREN UND REAKTOR ZUR BILDUNG UND ZUR KATALYTISCHEN UMSETZUNG EINES EDUKTGEMISCHS**

(71) Anmelder: Linde AG, 80331 München (DE)
(72) Erfinder: Wellenhofer, Anton, 82069 Hohenschäftlarn (DE); Zellhuber, Mathieu, 82152 Martinsried (DE); Schubert, Martin, 81375 München (DE); Birk, Robert, 80331 München (DE); Pichler, Celine, 80331 München (DE); Fritz, Helmut, 81375 München (DE)
(74) Vertreter: m patent group

(57) **Zusammenfassung**

Es wird ein Verfahren zur Bildung und zur katalytischen Umsetzung eines zündfähigen Gasgemischs vorgeschlagen, bei dem zumindest ein erstes Gas oder Gasgemisch, das Sauerstoff enthält, und ein zweites Gas oder Gasgemisch, das eine oder mehrere oxidierbare Verbindungen enthält, zu dem zündfähigen Gasgemisch vermischt werden, wobei das zündfähige Gasgemisch einer Reaktionszone (12) eines Reaktors (1) zugeführt wird. Das erste Gas oder Gasgemisch und das zweite Gas oder Gasgemisch werden in eine Mischkammer (11) eingespeist, die eine mit einer Anzahl von Durchtritten (131) versehene Begrenzungswand (13) aufweist, wobei das erste Gas oder Gasgemisch über die Durchtritte (131) der Begrenzungswand (13) in die Mischkammer (11) eingespeist wird und wobei das zweite Gas oder Gasgemisch mittels einer oder mehrerer sich in die Mischkammer (11) erstreckender Einspeiseleitungen (14) mit Einspeisöffnungen (141) in die Mischkammer (11) eingespeist wird. Ein entsprechender Reaktor (1) ist ebenfalls Gegenstand der vorliegenden Erfindung.

## Beschreibung

Die vorliegende Erfindung betrifft ein Verfahren und eine Anlage zur Bildung und zur katalytischen Umsetzung eines Eduktgemischs gemäß den jeweiligen Oberbegriffen der unabhängigen Patentansprüche.

### Stand der Technik

In einer Reihe von chemischen Prozessen werden Eduktgemische katalytisch umgesetzt. Diese können in Form zündfähiger Gasgemische vorliegen und werden dann unterhalb ihrer Selbstzündtemperatur der katalytischen Umsetzung zugeführt. Nachfolgend wird unter einem "zündfähigen Gasgemisch" ein Gasgemisch verstanden, das eine oder mehrere oxidierbare Komponenten, insbesondere einen oder mehrere Kohlenwasserstoffe, sowie Sauerstoff umfasst. Der Sauerstoff kann beispielsweise in Form von Luft oder reinem Sauerstoff zugegeben werden. Ein zündfähiges Gasgemisch weist eine Zusammensetzung auf, die es ermöglicht, das Gasgemisch mittels einer Zündquelle zu zünden. Wie auch nachfolgend erläutert, können in entsprechenden Prozessen auch nur zeitweise zündfähige Gasgemische vorliegen, beispielsweise in einem Anfahrbetrieb, bei Prozessabweichungen und dergleichen. Auch ein solches nur zeitweise gebildetes zündfähiges Gasgemisch kann als Eduktgemisch der katalytischen Umsetzung zugeführt werden.

Die vorliegende Erfindung wird u.a. am Beispiel der oxidativen Dehydrierung (engl. Oxidative Dehydrogenation, ODH) von Alkanen mit zwei bis vier Kohlenstoffatomen beschrieben, bei der die Alkane zusammen mit Sauerstoff als Eduktgemisch einer katalytischen Reaktionszone eines Reaktors zugeführt werden. Ein entsprechendes Eduktgemisch kann grundsätzlich zündfähig sein. Insbesondere kann die Erfindung bei der ODH von Ethan (sogenannte ODH-E), grundsätzlich aber auch bei der ODH höherer Alkane wie Propan und Butan eingesetzt werden. Die Erfindung ist jedoch auch für andere Prozesse einsetzbar und vorteilhaft, in denen gasförmige Eduktgemische katalytisch umgesetzt werden, beispielsweise bei anderen Oxidationsprozessen wie der Synthese von Ethylenoxid oder Acrylsäure.

Die ODH kann gegenüber etablierteren Verfahren zur Herstellung von Alkenen wie dem Steamcracken oder der katalytischen Dehydrierung vorteilhaft sein. So besteht hier aufgrund der Exothermie der beteiligten Reaktionen keine thermodynamische Gleichgewichtslimitierung. Grundsätzlich ist keine Regenerierung der eingesetzten Katalysatoren erforderlich, da die Anwesenheit von Sauerstoff eine in-situ-Regenerierung ermöglicht. Schließlich werden im Gegensatz zum Steamcracken geringere Mengen an wertlosen Nebenprodukten wie Koks gebildet.

Zu weiteren Details bezüglich der ODH sei auf einschlägige Fachliteratur, beispielsweise Ivars, F. und López Nieto, J. M., Light Alkanes Oxidation: Targets Reached and Current Challenges, in: Duprez, D. und Cavani, F. (Hrsg.), Handbook of Advanced Methods and Processes in Oxidation Catalysis: From Laboratory to Industry, London 2014: Imperial College Press, Seiten 767-834, oder Gärtner, C.A. et al., Oxidative Dehydrogenation of Ethane: Common Principles and Mechanistic Aspects, ChemCatChem, Bd. 5, Nr. 11, 2013, Seiten 3196 bis 3217, verwiesen.

Bei der ODH und anderen Verfahren, in denen zumindest zeitweise zündfähige Gasgemische gebildet werden können, kann es bei Vorhandensein einer Zündquelle stromauf oder in der katalytischen Reaktionszone eines Reaktors zu einer unerwünschten Zündung kommen. Der nachfolgende weitgehend unkontrollierte Abbrand kann deflagrativ oder detonativ ablaufen.

Bei einer Explosion handelt es sich um einen unkontrollierten Abbrand eines zündfähigen Gasgemischs mit laminarer Flammenfront. Bei einer Deflagration liegt eine turbulente Flammenfront vor. Explosionen und Deflagrationen einerseits und Detonationen andererseits unterscheiden sich im Wesentlichen durch die Geschwindigkeit der Ausbreitung. Bei einer Explosion bzw. Deflagration liegt diese unterhalb, bei einer Detonation typischerweise deutlich oberhalb der Schallgeschwindigkeit. Eine Explosion bzw. Deflagration kann nach einer bestimmten Anlauflänge und einer Mindestkonzentration an Brennstoff und Sauerstoff in eine Detonation umschlagen. Durch Explosionen, Deflagrationen und Detonationen von Gasgemischen kommt es zu einem massiven Druckanstieg, der zum Bersten der verwendeten Anlageteile und entsprechenden Folgeschäden führen kann.

Bei einer Explosion bzw. Deflagration eines stöchiometrischen Gemischs aus Alkanen, Alkenen und Luft kann es zu einer Drucksteigerung um den Faktor zehn, bei einer Explosion bzw. Deflagration eines stöchiometrischen Gemischs aus Alkanen, Alkenen und Sauerstoff zu einer Drucksteigerung um den Faktor 20 kommen. Im Falle einer Detonation werden nochmals weitaus höhere Drucksteigerungen bewirkt.

Ist nachfolgend von einer Explosion die Rede, erstrecken sich die entsprechenden Erläuterungen auch auf eine Deflagration. Entsprechend bieten "explosionsfeste" Anordnungen bzw. Explosionsschutzmaßnahmen auch einen Schutz vor Deflagrationen.

Es ist möglich, entsprechende Mischungszustände, d.h. die Bildung zündfähiger Gasgemische, grundsätzlich zu vermeiden und in diesem Zusammenhang Maßnahmen zu ergreifen, die es ermöglichen, die Bildung zündfähiger Gasgemische auch beim An- und Abfahren sowie bei Prozessabweichungen sicher auszuschließen. Ferner ist es möglich, entsprechende Verfahren bei Niederdruck zu betreiben und die verwendeten Anlagen explosionsfest, gegebenenfalls sogar detonationsfest, auszuführen. In diesem Zusammenhang können alternativ oder zusätzlich sicherheitsgerichtete Ableitungsmaßnahmen bzw. -mittel, beispielsweise Berstscheiben oder Explosionsschutzklappen, eingesetzt werden.

Grundsätzlich kann jedoch hinsichtlich des Umsetzungsverhaltens, des Produktspektrums bzw. der Selektivität und/oder in Anbetracht einer nachgeschalteten Produktaufbereitung jedoch die katalytische Umsetzung eines zündfähigen Gasgemischs als Eduktgemisch wünschenswert oder obligatorisch sein. In derartigen Fällen ist daher die Vermeidung der Bildung zündfähiger Gasgemische nicht möglich oder zumindest aus unter den genannten Aspekten nachteilig. Die explosions- oder detonationsfeste Auslegung von Anlagen bzw. die Bereitstellung von entsprechenden Ableitungsmaßnahmen bzw. -mitteln führt zu zusätzlichen Kosten.

Die Erfindung stellt sich die Aufgabe, Maßnahmen anzugeben, die es ermöglichen, die Bildung und ggf. katalytische Umsetzung entsprechender Gasgemische, die zumindest zeitweise in zündfähigen Zustand vorliegen können, ohne unerwünschte Zündung und nachfolgende Explosion bzw. Deflagration oder Detonation sicher zu ermöglichen.

### Offenbarung der Erfindung

Vor diesem Hintergrund schlägt die vorliegende Erfindung ein Verfahren und einen Reaktor zur katalytischen Umsetzung eines gasförmigen Eduktgemischs und eine entsprechende Anlage mit den Merkmalen der unabhängigen Patentansprüche vor. Ausgestaltungen sind jeweils Gegenstand der abhängigen Patentansprüche sowie der nachfolgenden Beschreibung.

Die vorliegende Erfindung geht von einem Verfahren zur Bildung und zur katalytischen Umsetzung eines gasförmigen Eduktgemischs aus, bei dem zumindest ein erstes Gas oder Gasgemisch und ein zweites Gas oder Gasgemisch zu dem Eduktgemisch vermischt werden. Das Eduktgemisch wird zu dessen katalytischer Umsetzung einer Reaktionszone eines Reaktors zugeführt.

Beispiele für katalytische Umsetzungen wurden bereits zuvor erläutert. Wie erwähnt, eignet sich das erfindungsgemäße Verfahren insbesondere zum Einsatz in ODH-(E-) Reaktoren bzw. entsprechenden Verfahren, bei denen einer Reaktionszone eines Reaktors ein Alkane und Sauerstoff enthaltendes Gasgemisch als Eduktgemisch zugeführt wird. Wie erwähnt, kann die vorliegende Erfindung jedoch auch beispielsweise in den zuvor genannten anderen Prozessen bzw. in sämtlichen Prozessen zum Einsatz kommen, in denen gasförmige Eduktgemische katalytisch umgesetzt werden sollen und dabei eine Zündfähigkeit nicht von vorneherein ausgeschlossen werden kann oder soll.

Grundsätzlich kann die Reaktionszone im Rahmen der vorliegenden Erfindung mit beliebigen Katalysatoren, insbesondere in immobilisierter Form, ausgestattet sein. Beispielsweise können im Rahmen der vorliegenden Erfindung Festbettkatalysatoren, Wabenkörper oder katalytisch aktive Körper in von außen erwärmten und/oder gekühlten Rohren zum Einsatz kommen. Im Falle eines Rohrreaktors ist beispielsweise eine Anzahl von Reaktionsrohren mit Katalysator befüllt. Diese werden durch eine Reaktorkammer geführt und in dieser beheizt oder gekühlt. Durch geeignete Verteilereinrichtungen wird das zündfähige Gasgemisch auf die einzelnen Reaktionsrohre verteilt, wie auch nachfolgend noch erläutert.

Ist hier davon die Rede, dass eine Bildung und eine katalytische Umsetzung eines gasförmigen Eduktgemischs erfolgt bzw. dieses Gasgemisch einer Reaktionszone eines Reaktors zugeführt wird, sei hierunter, wie bereits zuvor erläutert, nicht notwendigerweise verstanden, dass im Rahmen des gesamten Verfahrens ständig ein zündfähiges Gasgemisch als das Eduktgemisch gebildet und umgesetzt werden muss. Insbesondere kann es im Rahmen der vorliegenden Erfindung auch lediglich zu bestimmten Zeiten, d.h. beispielsweise im Anfahrbetrieb eines entsprechenden Reaktors bzw. bei der Umstellung zwischen unterschiedlichen Betriebsarten oder bei Betriebsabweichungen, zur Bildung zündfähiger Gasgemische kommen. In einem Regelbetrieb kann hingegen der Reaktionszone beispielsweise auch ein nicht zündfähiges Gasgemisch als Eduktgemisch zugeführt werden. Umgekehrt kann ein nicht zündfähiges Gemisch auch nur nahe oder am gewählten Betriebspunkt gefahren werden, während beim Anfahren oder Betriebswechsel nicht zündfähige Bedingungen gewählt werden, beispielsweise durch erhöhte Verdünnung mit inerten Gasen.

Die Zündfähigkeit eines entsprechenden Gasgemischs bestimmt sich nach dessen Zusammensetzung, insbesondere dessen Gehalt an oxidierbaren Verbindungen und Sauerstoff. Insbesondere enthält ein entsprechendes zündfähiges Gasgemisch Kohlenwasserstoffe wie im Falle der ODH Alkane. Neben dem ersten und dem zweiten Gasgemisch können im Rahmen der vorliegenden Erfindung auch weitere Gasgemische verwendet und vermischt werden.

Insbesondere kann im Rahmen der vorliegenden Erfindung das erste Gas oder Gasgemisch eine oder mehrere oxidierbare Verbindungen, insbesondere Alkane oder Alkene, enthalten. Das zweite Gas oder Gasgemisch kann insbesondere Sauerstoff enthalten. Grundsätzlich ist auch möglich, dass das erste Gas oder Gasgemisch den Sauerstoff enthält und das zweite Gas oder Gasgemisch die eine oder die mehreren oxidierbaren Verbindungen. Bei dem jeweils den Sauerstoff enthaltenden Gas oder Gasgemisch kann es sich um reinen Sauerstoff, Luft oder sauerstoffangereicherte Luft oder Gemische hiervon handeln. Allgemein können beide Gase unabhängig von der Sauerstoffquelle weitere inerte oder wenig reaktive Verdünnungsmittel enthalten, wie etwa Wasserdampf, Stickstoff, Methan, Kohlendioxid oder weitere Komponenten. Der Begriff "inert" bezieht sich dabei auf das Reaktionsverhalten entsprechender Verbindungen in einem entsprechenden Reaktionssystem und ist nicht auf klassischerweise als "inert" bezeichnete Verbindungen wie beispielsweise die Inertgase Stickstoff, Helium oder Argon beschränkt.

Grundsätzlich ist es im Rahmen der vorliegenden Erfindung auch möglich, das erste und/oder das zweite Gas oder Gasgemisch bereits als Gas oder Gasgemisch bereitzustellen, das eine oder mehrere oxidierbare Verbindungen und zugleich Sauerstoff enthält. Auf diese Weise kann gegebenenfalls eine Vermischbarkeit des ersten des zweiten Gases oder Gasgemischs verbessert werden. Auch wenn beispielsweise das erste oder das zweite Gasgemisch vollständig oder teilweise als Recyclestrom bereitgestellt wird, kann dieses neben einer oder mehreren oxidierbaren Verbindungen auch Sauerstoff enthalten. Im Gegensatz zu dem unter Verwendung des ersten und des zweiten Gases oder Gasgemischs gebildeten Eduktgemisch kann in einem derartigen ersten oder zweiten Gasgemisch jedoch gegebenenfalls eine Zündunfähigkeit zu jedem Zeitpunkt sichergestellt werden.

Im Rahmen der vorliegenden Erfindung ist nun vorgesehen, das erste Gas oder Gasgemisch und das zweite Gas oder Gasgemisch in eine Mischkammer einzuspeisen, die eine mit einer Anzahl von Durchtritten versehene Begrenzungswand aufweist, wobei das erste Gasgemisch über die Durchtritte der Begrenzungswand in die Mischkammer eingespeist wird und wobei das zweite Gas oder Gasgemisch mittels einer oder mehrerer sich in die Mischkammer erstreckender Einspeiseleitungen mit Einspeiseöffnungen in die Mischkammer eingespeist wird.

Im Rahmen der vorliegenden Erfindung ist dabei vorgesehen, dass das erste Gas oder Gasgemisch über die Durchtritte der Begrenzungswand in einem (strömungsmechanisch) kritischen Strömungszustand in die Mischkammer eingespeist wird. Ein kritischer Strömungszustand liegt dann vor, wenn das erste Gas oder Gasgemisch mit Schallgeschwindigkeit aus den Durchtritten in der Begrenzungswand aus- und in die Mischkammer eintritt. Zu dem Begriff des "kritischen Strömungszustands" sei im Übrigen auf geeignete Fachliteratur aus dem Bereich der Düsentechnik verwiesen. Ein entsprechender kritischer Strömungszustand kann insbesondere durch eine geeignete Wahl von Anzahl und Durchmesser der Durchtritte der Begrenzungswand und die entsprechenden Strömungsparameter des ersten Gases oder Gasgemischs, insbesondere dessen Druck stromauf der Begrenzungswand, eingestellt werden. Entsprechende Parameter können vom Fachmann ohne weiteres, beispielsweise auf Grundlage von strömungsdynamischen Berechnungen oder Simulationen, ermittelt werden.

Wird auf diese Weise das erste Gas oder Gasgemisch in einem kritischen Strömungszustand in die Mischkammer eingespeist, kann eine Rückvermischung aus der Mischkammer in einen Bereich stromauf der Mischkammer bzw. der Begrenzungswand sicher vermieden werden. Ein zündfähiges Gasgemisch kann sich daher in einem entsprechenden stromaufwärtigen Bereich nicht ausbilden bzw. sich nicht in einen entsprechenden stromaufwärtigen Bereich ausbreiten. Ein derartiger stromaufwärtiger Bereich muss daher nicht unter Beachtung entsprechender Sicherheitsmaßnahmen ausgebildet werden, was eine kostengünstigere Erstellung eines entsprechenden Reaktors ermöglicht.

Aus der US 7,521,029 B2 ist ein, bei dem Rohrreaktor zur Durchführung katalytischer Gasphasenreaktionen bekannt, bei dem bestimmte, mit einem Eduktgemisch beaufschlagte Anlagenteile explosionsfest ausgelegt sind. Derartige Anlagenteile weisen dabei ein möglichst geringes Volumen auf, so dass der apparative Aufwand bei der explosionsfesten Auslegung begrenzt werden kann. Insbesondere offenbart diese Druckschrift jedoch nicht, wie im Rahmen der vorliegenden Erfindung vorgesehen, eine Mischkammer mit einer mit Durchtritten versehenen Begrenzungswand bereitzustellen und ein Gasgemisch über Durchtritte in einer entsprechenden Begrenzungswand in die Mischkammer einzuspeisen. Insbesondere ist hier auch keine Einspeisung in einem kritischen Strömungszustand offenbart. Im Gegensatz zur erwähnten US 7,521,029 B2 kann im Rahmen der vorliegenden Erfindung demgegenüber der apparative Aufwand deutlich reduziert werden, indem lediglich eine entsprechende Begrenzungswand in den Reaktor eingebracht wird.

Die vorliegende Erfindung ermöglicht auf diese Weise eine sichere Durchführung von katalytischen Reaktionen, indem ein gegebenenfalls zündfähiges Gasgemisch erst unmittelbar stromauf einer Reaktionszone gebildet und auf einen bestimmten Bereich, nämlich die erwähnte Mischkammer (und gegebenenfalls die sich anschließende Reaktionszone) begrenzt wird. Mit anderen Worten wird im Rahmen der vorliegenden Erfindung eine Mischzone, d.h. der Bereich, in dem der reaktive Anteil eines Eduktstromes mit einem Oxidator gemischt wird, bis zum Beginn der Reaktionszone durch technisch einfache und kostengünstige Maßnahmen auf eine sicherheitstechnisch unkritische Größe minimiert. Auf diese Weise lässt sich insbesondere der Bereich, in dem ein entsprechendes zündfähiges Gasgemisch vorliegt, auf einfache Weise beispielsweise explosions- oder detonationsfest auslegen oder mit entsprechenden Ableitungsmaßnahmen bzw. -mitteln versehen, ohne dass der gesamte Reaktor entsprechend ausgebildet werden muss.

Nachfolgend werden zunächst Aspekte und Ausführungsformen des erfindungsgemäß vorgeschlagenen Verfahrens näher erläutert. Daran anschließend wird insbesondere die vorrichtungsmäßige Implementierung des erfindungsgemäßen Verfahrens anhand eines Reaktors und bevorzugter Ausführungsformen hiervon beschrieben. Es versteht sich, dass die jeweils das erfindungsgemäße Verfahren und seine Ausgestaltungen betreffenden Erläuterungen den erfindungsgemäßen Reaktor und seine Ausgestaltungen in gleicher Weise betreffen und hier lediglich zur Vermeidung von Wiederholungen nicht wiederholt vorgenommen werden. Grundsätzlich kann, wie erläutert, das erste oder das zweite Gas oder Gasgemisch das Sauerstoff enthaltende Gasgemisch und das jeweils andere Gasgemisch das die eine oder die mehreren oxidierbare Komponenten enthaltende Gasgemisch sein. Vorteilhafterweise wird jenes Medium bzw. Gas oder Gasgemisch mit dem konstanten und höheren Strom über die Begrenzungswand bzw. deren Durchtritte geführt.

Gemäß einer besonders bevorzugten Ausgestaltung des erfindungsgemäßen Verfahrens ist zusätzlich zur Einspeisung des ersten Gases oder Gasgemischs in dem kritischen Strömungszustand in die Mischkammer vorgesehen, dass das erste Gas oder Gasgemisch an einer der Mischkammer abgewandten Seite der Begrenzungswand mit einem höheren Druck bereitgestellt wird, als er in der Mischkammer vorliegt. Auf diese Weise wird eine zusätzliche Sicherheit gegen eine Rückvermischung in einen stromaufwärtigen Bereich erzielt. Insgesamt wird durch die erfindungsgemäßen Maßnahmen auch eine Gleichverteilung des ersten Gases oder Gasgemischs in der Mischkammer erreicht.

Durch geeignete technische Maßnahmen, wie sie nachfolgend insbesondere auch unter Bezugnahme auf die apparative Ausgestaltung des erfindungsgemäß vorgesehenen Reaktors und seiner Ausführungsformen erläutert werden, kann ein entsprechender kritischer Strömungszustand insbesondere auch durch eine geeignete Wahl der Durchtritte, die insbesondere in Form von Düsen ausgebildet sein können, erzielt werden. Vorteile werden durch die Verwendung von Venturidüsen bzw. Düsen mit Venturicharakter erzielt. Besondere Vorteile werden auch durch die Verwendung von Lavaldüsen bzw. Düsen mit Lavalcharakter erzielt.

Besondere Vorteile werden erzielt, wenn das zweite Gas oder Gasgemisch, beispielsweise über einen Rohrverteiler, in der Mischkammer mit dem ersten Gas oder Gasgemisch gemischt wird. In einem auf diese Weise definierten Mischbereich kann das gasförmige Eduktgemisch ausgebildet werden. Die Einspeisung des zweiten Gases oder Gasgemischs erfolgt vorteilhafterweise derart, dass das zweite Gas oder Gasgemisch mit einer höheren Geschwindigkeit als der laminaren oder turbulenten Flammgeschwindigkeit des zündfähigen Gasgemischs und/oder in einem kritischen Strömungszustand in die Mischkammer eingespeist wird. Auch derartige Strömungsgeschwindigkeiten bzw. Strömungscharakteristika und die hierzu erforderlichen Düsen, Rohrverteiler und dergleichen werden vom Fachmann beispielsweise durch Strömungssimulationen oder Berechnungen ermittelt.

Ein erfindungsgemäß vorgesehener Reaktor ist zur Bildung und zur katalytischen Umsetzung eines gasförmigen Eduktgemisch eingerichtet, wobei der Reaktor eine Reaktionszone aufweist und dafür eingerichtet ist, zumindest ein erstes und ein zweites Gas oder Gasgemisch zu dem Eduktgemisch zu vermischen und der Reaktionszone zuzuführen. Erfindungsgemäß weist der Reaktor eine Mischkammer auf, die eine mit einer Anzahl von Durchtritten versehene Begrenzungswand aufweist, wobei Mittel vorgesehen sind, die dafür eingerichtet sind, das erste Gas oder Gasgemisch über die Durchtritte in einem kritischen Strömungszustand in die Mischkammer einzuspeisen. Bezüglich der zur Herstellung eines kritischen Strömungszustandes vorgesehenen Mittel sei auf die obigen und die nachstehenden Erläuterungen verwiesen. Ferner sind zur Einspeisung des zweiten Gases oder Gasgemischs in die Mischkammer eine oder mehrere sich in die Mischkammer erstreckende Einspeiseleitungen mit Einspeiseöffnungen bereitgestellt. Zu den Merkmalen und Vorteilen eines entsprechenden Reaktors sei auch auf die obigen, das erfindungsgemäß vorgeschlagene Verfahren betreffenden Erläuterungen verwiesen.

In dem einfachsten Fall können die Durchtritte durch die Begrenzungswand zumindest teilweise in Form von zylindrischen Bohrungen ausgebildet sein. Eine derartige Ausführung ist besonders einfach realisierbar, erfordert jedoch gegebenenfalls eine hohe Druckdifferenz zwischen einem stromauf der Mischkammer angeordneten Bereich und der Mischkammer selbst, um den kritischen Strömungszustand des ersten Gases oder Gasgemischs sicherzustellen. Eine derartige Lösung bietet sich daher insbesondere dann an, wenn ein entsprechendes erstes Gas oder Gasgemisch bei vergleichsweise hohem Druck vorliegt und bei vergleichsweise geringem Druck der Reaktionszone zugeführt werden soll.

Gemäß einer alternativen Ausgestaltung der vorliegenden Erfindung sind die Durchtritte hingegen zumindest teilweise als Düsen ausgebildet, wobei eine Düse sich insbesondere durch einen sich entlang einer Düsenachse ändernden Querschnitt auszeichnet. Eine entsprechende Düse kann insbesondere austauschbar ausgebildet und dabei beispielsweise in die Begrenzungswand eingeschraubt oder auf andere Weise in dieser fixiert sein. Eine Düse ermöglicht gegenüber einer zylindrischen Bohrung eine gezielte strömungstechnische Beeinflussung. Auf diese Weise kann insbesondere sichergestellt werden, dass auch bei einer geringeren Druckdifferenz zwischen einem Bereich stromauf der Mischkammer und der Mischkammer selbst ein kritischer Strömungszustand bereitgestellt werden kann.

Gemäß einer besonders bevorzugten Ausführungsformen der vorliegenden Erfindung sind entsprechende Düsen zumindest teilweise als Düsen mit Venturi- oder Lavalcharakteristik ausgebildet, d.h. als Düsen, deren Querschnitt sich zunächst verengt und anschließend weitet, wobei der Übergang von einem zum anderen Teil stetig erfolgt. Der Querschnitt ist vorteilhafterweise an jeder Stelle kreis- oder ellipsenförmig. Durch die Verwendung von Düsen mit Venturi- oder Lavalcharakteristik bzw. von Venturi- oder Lavaldüsen wird die erforderliche Druckdifferenz zwischen dem stromauf gelegenen Bereich und der Mischkammer besonders stark reduziert, so dass der zur Bereitstellung eines kritischen Strömungszustandes erforderliche Druckverlust ausgesprochen gering ist.

Gemäß einer besonders bevorzugten Ausgestaltung der vorliegenden Erfindung kann die Mischkammer mit einer Schüttung versehen sein, die insbesondere inert ausgebildet sein kann, jedoch auch bereits katalytisch wirksam sein kann. Auf diese Weise wird die Masse des reaktiven Gases in einer entsprechenden Mischkammer reduziert und die inerte Masse erhöht. Durch eine entsprechende Schüttung kann einer anlaufenden Explosion Energie entzogen werden, so dass der Abbrand erlischt. Damit kann der geforderte Auslegungsdruck nennenswert reduziert und der Druckmantel dementsprechend günstiger ausgeführt werden.

Anstelle einer inerten Schüttung kann für denselben Zweck auch eine strukturierte Packung und/oder ein statisches Mischelement vorgesehen sein. Auch durch die thermische Masse einer strukturierten Packung oder eines statischen Mischelements kann einer anlaufenden Explosion Energie entzogen werden. Die strukturierte Packung, die beispielsweise aus entsprechend strukturierten Blechen gebildet sein kann, oder ein statisches Mischelement kann insbesondere auch nur in einem Teil der Mischkammer angeordnet sein, insbesondere lediglich stromab der Einspeiseleitungen für das zweite Gasgemisch bzw. deren Mündungen in die Mischkammer. Durch eine strukturierte Packung oder ein statisches Mischelement kann zusätzlich eine verbesserte Mischung des ersten und des zweiten Gasgemischs in der Mischkammer bzw. dem entsprechenden Bereich erzielt werden.

Wie bereits erläutert, kann bzw. können die eine oder mehrere sich in die Mischkammer erstreckenden Einspeiseleitungen mit den Einspeiseöffnungen für das zweite Gas oder Gasgemisch vorteilhafterweise als Rohrverteiler ausgebildet sein. Auf diese Weise kann eine Gleichverteilung des zweiten Gases oder Gasgemischs in dem ersten Gas oder Gasgemisch bzw. in der Mischkammer erzielt werden.

Im Rahmen der vorliegenden Erfindung weist eine entsprechende Mischkammer insbesondere einen zylindrischen Innenraum auf, wobei eine Schnittkreisfläche des zylindrischen Innenraums durch die erwähnte Begrenzungswand gebildet ist. Dieser zylindrische Innenraum verjüngt sich insbesondere ausgehend von der Begrenzungswand in Richtung der Reaktionszone nicht bzw. erfährt keine Querschnittsänderung, so dass eine entsprechende Reaktionszone technisch einfach in bekannten Reaktoren implementiert werden kann.

Die andere Schnittkreisfläche des zylindrischen Innenraums ist insbesondere durch eine weitere Begrenzungswand mit Durchtritten gebildet, wobei die weitere Begrenzungswand die Reaktionszone von der Mischkammer abgrenzt. Bei der weiteren Begrenzungswand kann es sich insbesondere um einen Rohrboden handeln, von dem ausgehend sich Reaktionsrohre erstrecken, die mit einem Katalysator gefüllt sind. Beide Begrenzungswände können dabei technisch einfach und unaufwendig als Scheiben bereitgestellt werden, die in eine zylindrische Außenhülle eines entsprechenden Reaktors eingepasst werden können.

Die Mischkammer kann dabei insbesondere derart definiert werden, dass die beiden erwähnten Begrenzungswände, beispielsweise mittels Stehbolzen, in einem definierten Abstand, der die Größe der Mischkammer vorgibt, aneinander befestigt werden. Entsprechende Stehbolzen können dabei insbesondere mit einer der Begrenzungswände verschraubt und mit der anderen verschweißt werden. Auf diese Weise kann ein entsprechender Reaktor vollständig zerlegbar ausgebildet werden. Auf diese Weise können sich die beiden Begrenzungswände bei einer postuliert symmetrisch und zeitgleich auf die Begrenzungswände wirkenden Explosion gegeneinander abstützen, so dass auf weitere Stützmaßnahmen verzichtet werden kann bzw. diese kleiner dimensioniert werden können.

Mit besonderem Vorteil ist die im Rahmen der vorliegenden Erfindung eingesetzte Mischkammer explosionsfest ausgebildet. Aufgrund des räumlich stark reduzierten Vermischungsbereichs kann dabei eine entsprechende explosionsfeste Ausbildung besonders einfach und kostengünstig erfolgen. Alternativ oder zusätzlich zu einer explosionsfesten Ausbildung können Ableitungsmaßnahmen bzw. -mittel, beispielsweise Berstscheiben oder Explosionsschutzklappen, eingesetzt werden.

Insbesondere kann ein Bereich zwischen den erwähnten Begrenzungswänden im Rahmen der vorliegenden Erfindung auf weniger als einen Meter, insbesondere weniger als einen halben Meter, reduziert werden.

Insgesamt kann durch die im Rahmen der vorliegenden Erfindung vorgeschlagenen Maßnahmen erreicht werden, dass ein regelhaft bzw. im Falle von Verfahrensabweichungen gebildetes brennbares Gasgemisch auf ein sehr kleines Volumen reduziert wird. Die Auswirkungen eines unerwünschten Zündens werden auf dieses kleine Volumen beschränkt. Durch die Beschränkung auf das kleine Volumen kann maximal eine Explosion erfolgen, ein Umschlag zur Detonation wird verhindert. Das kleine Volumen in Form der Mischkammer kann explosionsdruckfest ausgeführt werden, so dass der Betrieb durch eine Explosion nicht wesentlich beeinträchtigt wird. Das erfindungsgemäße Verfahren ist auch bei höheren Systemdrücken und hohen Eduktkonzentrationen durchführbar. In dem Gegensatz zu einer beispielsweise in der EP 1292 382 B1 vorgeschlagene Lösung, in der eine Eindüsung in einzelne Reaktionsrohre individuell vorgenommen wird, kann das erfindungsgemäße Verfahren bzw. ein entsprechender Reaktor technisch einfach durchgeführt bzw. erstellt werden.

Die Erfindung wird nachfolgend unter Bezugnahme auf die beigefügten Zeichnungen näher erläutert, welche bevorzugte Ausgestaltungen der vorliegenden Erfindung veranschaulichen.

Kurze Beschreibung der Zeichnungen
Figur 1 veranschaulicht einen Reaktor gemäß einer Ausführungsform der Erfindung in stark vereinfachter Teildarstellung.
Figur 2 veranschaulicht Begrenzungswände einer Mischkammer eines Reaktors gemäß einer Ausführungsform der Erfindung in stark vereinfachter Teildarstellung.

In den Figuren sind einander entsprechende Elemente mit identischen Bezugszeichen angegeben und werden der Übersichtlichkeit halber nicht wiederholt erläutert.

### Ausführliche Beschreibung der Zeichnungen

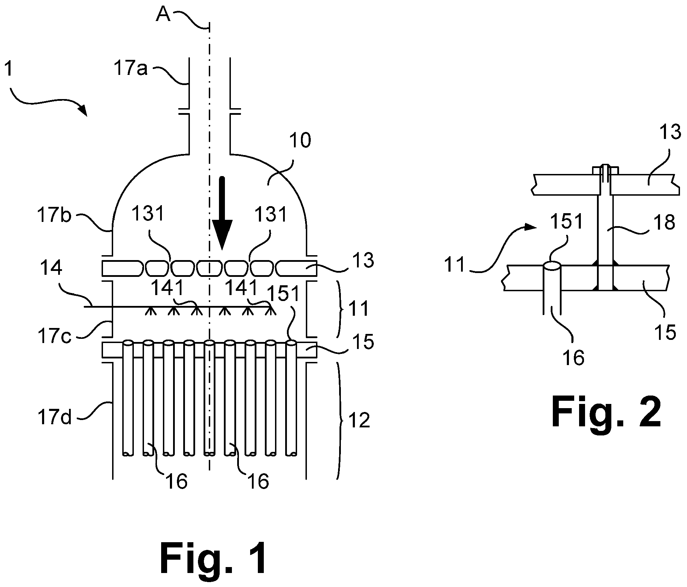

In Figur 1 ist ein Reaktor gemäß einer Ausführungsform der vorliegenden Erfindung in stark vereinfachter Teildarstellung veranschaulicht und insgesamt mit 1 bezeichnet. Der Reaktor 1 ist dabei im Längsschnitt dargestellt. Der Reaktor 1 umfasst eine Mischkammer 11 und eine Reaktionszone 12, die jeweils zylindrisch ausgebildet sind und eine Mittelachse A aufweisen.

Die Mischkammer 11 ist mittels einer Begrenzungswand 13 von einem stromaufwärtigen Bereich 10 abgegrenzt, aus dem ein erstes Gas oder Gasgemisch, wie hier mittels eines Pfeils veranschaulicht, in Richtung der Begrenzungswand strömt. Zu der Natur des ersten Gases oder Gasgemischs sei ausdrücklich auf die obigen Erläuterungen verwiesen. Das erste Gas oder Gasgemisch strömt über Durchtritte 131, die insbesondere als Düsen, besonders vorteilhafterweise als Lavaldüsen bzw. Düsen mit Lavalcharakteristik ausgebildet sein können, in die Mischkammer 11 ein. Die Einstimmung erfolgt dabei in einem kritischen Strömungszustand, wie erläutert.

Zur Einspeisung eines zweiten Gases oder Gasgemischs, bezüglich dessen ebenfalls auf die obigen Erläuterungen verwiesen wird, sind eine oder mehrere Einspeiseleitungen 14 mit Einspeiseöffnungen 141 in die Mischkammer 11 vorgesehen. Wie erläutert, kann auch die Einspeisung des zweiten Gases oder Gasgemischs in einem kritischen Strömungszustand erfolgen.

Die Mischkammer 11 ist ferner durch eine weitere Begrenzungswand 15 mit Durchtritten 151 begrenzt, bei der es sich im dargestellten Beispiel um einen Rohrboden handelt, an den sich Reaktionsrohre 16, die insbesondere mit einem geeigneten Katalysator gefüllt sein können, anschließen können. Die genannten Elemente sind ferner durch Außenhüllensegmente 17a bis 17d begrenzt, die einen zylindrischen Querschnitt des Reaktors 1 um die Mittelachse A definieren.

Figur 2 veranschaulicht Begrenzungswände 13, 15 eines Reaktors gemäß einer Ausführungsform der vorliegenden Erfindung in stark vereinfachter Teildarstellung. Zu weiteren Erläuterungen sei auf die Ausführungen bezüglich Figur 1 verwiesen. In Figur 2 ist insbesondere veranschaulicht, wie diese Begrenzungswände 13, 15 mittels Stehbolzen 18, die im dargestellten Beispiel mit der Begrenzungswand 15 verschweißt und mit der Begrenzungswand 13 verschraubt sind, in einem definierten Abstand zueinander angeordnet werden können.

## Patentansprüche

1. Verfahren zur Bildung und katalytischen Umsetzung eines gasförmigen Eduktgemischs, bei dem ein erstes und ein zweites Gas oder Gasgemisch zu dem Eduktgemisch vermischt und danach einer Reaktionszone (12) eines Reaktors (1) zugeführt werden, **dadurch gekennzeichnet, dass** das erste und das zweite Gas oder Gasgemisch in eine Mischkammer (11) eingespeist werden, die eine mit einer Anzahl von Durchtritten (131) versehene Begrenzungswand (13) aufweist, wobei das erste Gas oder Gasgemisch über die Durchtritte (131) in einem [MF1]kritischen Strömungszustand in die Mischkammer (11) eingespeist wird und das zweite Gas oder Gasgemisch mittels einer oder mehrerer sich in die Mischkammer (11) erstreckender Einspeiseleitungen (14) mit Einspeiseöffnungen (141) in die Mischkammer (11) eingespeist wird.

2. Verfahren nach Anspruch 1, bei dem das erste Gas oder Gasgemisch an einer der Mischkammer (11) abgewandten Seite der Begrenzungswand (13) mit einem höheren Druck bereitgestellt wird, als er in der Mischkammer (11) vorliegt.

3. Verfahren nach einem der Ansprüche 1 oder 2, bei dem das zweite Gas oder Gasgemisch mit einer höheren Geschwindigkeit als der laminaren oder turbulenten Flammgeschwindigkeit des zündfähigen Gasgemischs und/oder in einem kritischen Strömungszustand in die Mischkammer (11) eingespeist wird.

4. Reaktor (1) zur Bildung und zur katalytischen Umsetzung eines gasförmigen Eduktgemischs, wobei der Reaktor (1) eine Reaktionszone (12) aufweist und dafür eingerichtet ist, zumindest ein erstes und ein zweites Gas oder Gasgemisch zu dem Eduktgemisch zu vermischen und der Reaktionszone (12) zuzuführen, **dadurch gekennzeichnet, dass** der Reaktor (1) eine Mischkammer (11) umfasst, die eine mit einer Anzahl von Durchtritten (131) versehene Begrenzungswand (13) aufweist, wobei Mittel vorgesehen sind, die dafür eingerichtet sind, das erste Gas oder Gasgemisch über die Durchtritte (131) in einem kritischen Strömungszustand in die Mischkammer (11) einzuspeisen, und wobei zur Einspeisung des zweiten Gases oder Gasgemischs in die Mischkammer (11) eine oder mehrere sich in die Mischkammer (11) erstreckende Einspeiseleitungen (14) mit Einspeiseöffnungen (141) bereitgestellt sind.

5. Reaktor (1) nach Anspruch 4, bei dem die Durchtritte (131) zumindest teilweise als zylindrische Bohrungen ausgebildet sind.

6. Reaktor (1) nach Anspruch 4, bei dem die Durchtritte (131) zumindest teilweise als Düsen ausgebildet sind.

7. Reaktor (1) nach Anspruch 6, bei dem die als Düsen ausgebildeten Durchtritte (131) zumindest teilweise eine Venturi- oder Lavalcharakteristik aufweisen.

8. Reaktor (1) nach Anspruch 6 oder 7, bei dem die als Düsen ausgebildeten Durchtritte (131) zumindest teilweise auswechselbar sind.

9. Reaktor (1) nach einem der Ansprüche 4 bis 8, bei dem die Mischkammer (11) mit einer Schüttung und/oder einer Packung mit statischer Mischwirkung und/oder einer anderen Mischeinrichtung versehen ist.

10. Reaktor (1) nach einem der vorstehenden Ansprüche, bei dem die eine oder die mehreren sich in die Mischkammer (11) erstreckenden Einspeiseleitungen (14) mit den Einspeisöffnungen (141) als Rohrverteiler ausgebildet ist oder sind.

11. Reaktor (1) nach einem der Ansprüche 4 bis 10, bei dem die Mischkammer (11) einen zylindrischen Innenraum aufweist, wobei eine Schnittkreisfläche des zylindrischen Innenraums durch die Begrenzungswand (13) gebildet ist.

12. Reaktor (1) nach Anspruch 11, bei dem die andere Schnittkreisfläche des zylindrischen Innenraums durch eine weitere Begrenzungswand (15) mit Durchtritten (151) gebildet ist, wobei die weitere Begrenzungswand (15) die Reaktionszone (12) von der Mischkammer (11) abgrenzt.

13. Reaktor (1) nach Anspruch 12, bei dem die Begrenzungswände (13, 15) mittels Stehbolzen in einem vorgegebenen Abstand aneinander befestigt sind.

14. Reaktor (1) nach einem der Ansprüche 4 bis 13, bei dem die Mischkammer (11) explosionsfest ausgebildet ist.
